(19) Europäisches Patentamt
European Patent Office
Office européen des brevets

(11) **EP 3 490 132 A1**

(12) **EUROPÄISCHE PATENTANMELDUNG**

(43) Veröffentlichungstag:
**29.05.2019 Patentblatt 2019/22**

(51) Int Cl.:
**H02M 5/458** (2006.01)    *H02M 1/00* (2006.01)
**H02M 3/155** (2006.01)    *H02M 1/32* (2007.01)

(21) Anmeldenummer: **17203953.9**

(22) Anmeldetag: **28.11.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Lange, Robert**
  **08451 Crimmitschau (DE)**
• **Seja, Marco**
  **09661 Rossau / OT Seifersbach (DE)**

(54) **ZWISCHENKREISUMRICHTER MIT GEZIELTER KOPPLUNG MIT MINDESTENS EINEM ANDEREM ZWISCHENKREISUMRICHTER**

(57)    Ein Zwischenkreisumrichter weist einen Zwischenkreis (3) mit einem Zwischenkreiskondensator (4) auf, die über einen Gleichrichter (1) mit einer Energieversorgung (2) und über einen Wechselrichter (5) mit einer Last (6) verbunden sind. Der Zwischenkreisumrichter weist zwei Anschlüsse (7, 8) auf, die über Leitungen (9, 10) den Potenzialen (Q1, Q2) des Zwischenkreises (3) verbunden sind. In einer Leitung (9) ist ein Schaltelement (11) angeordnet, dem eine Diode (12) parallel geschaltet ist. Dadurch kann bei geöffnetem Schaltelement (11) der Zwischenkreiskondensator (4) über die Diode (12) zwar geladen werden, nicht aber entladen. Bei geschlossenem Schaltelement (11) kann der Zwischenkreiskondensator (4) über das Schaltelement (11) zumindest entladen werden. Der Zwischenkreisumrichter weist eine Steuereinrichtung (13) auf, welche das Schaltelement (11) in Abhängigkeit von der Zwischenkreisspannung (U) ansteuert. In der Leitung (9) ist zwischen dem Schaltelement (11) und dem Anschluss (7) eine Induktivität (15) angeordnet. Der Zwischenkreisumrichter weist eine Freilaufdiode (16) auf, welche die Leitungen (9, 10) miteinander verbindet. Ein Diodenknotenpunkt (20), an dem die Freilaufdiode (16) mit der einen Leitung (10) verbunden ist, ist zwischen dem Schaltelement (11) und der Induktivität (15) angeordnet.

## FIG 2

EP 3 490 132 A1

**Beschreibung**

Die vorliegende Erfindung geht aus von einem Zwischenkreisumrichter,

- wobei der Zwischenkreisumrichter einen Zwischenkreis mit einem Zwischenkreiskondensator aufweist,
- wobei der Zwischenkreis und mit ihm der Zwischenkreiskondensator über einen eingangsseitigen Gleichrichter mit einer Energieversorgung verbunden sind und über einen ausgangsseitigen Wechselrichter mit einer Last verbunden sind,
- wobei der Zwischenkreisumrichter einen ersten und einen zweiten Anschluss aufweist, die über eine erste und eine zweite Leitung mit einem ersten und einem zweiten Potenzial des Zwischenkreises verbunden sind.

Die vorliegende Erfindung geht weiterhin aus von einer Gruppe von Zwischenkreisumrichtern, wobei die Zwischenkreisumrichter jeweils so wie obenstehend erläutert ausgebildet sind, wobei die ersten Anschlüsse der Zwischenkreisumrichter miteinander verbunden sind und die zweiten Anschlüsse der Zwischenkreisumrichter miteinander verbunden sind.

Elektrische Einrichtungen - beispielsweise größere elektrisch angetriebene Maschinen - weisen oftmals eine Vielzahl von elektrischen Verbrauchern (Lasten) auf. Die Lasten werden in vielen Fällen über einen jeweiligen Zwischenkreisumrichter aus einem gemeinsamen elektrischen Versorgungsnetz mit elektrischer Energie versorgt. Zur Versorgung mit elektrischer Energie werden die Gleichrichter an das elektrische Versorgungsnetz angeschlossen.

In manchen Fällen arbeiten die Lasten nicht permanent als Verbraucher, sondern zeitweise auch als Energielieferanten. Ein Beispiel sind elektrische Antriebe, die zum Abbremsen einer bewegten Masse verwendet werden. In derartigen Fällen wird durch entsprechende Ansteuerung des Wechselrichters Energie in den Zwischenkreis zurückgespeist. In manchen Fällen ist der Gleichrichter als gesteuerter Gleichrichter ausgebildet. In diesem Fall kann die in den Zwischenkreis zurückgespeiste Energie über den Gleichrichter weiter in das Versorgungsnetz zurückgespeist werden. In anderen Fällen ist der Gleichrichter jedoch als ungesteuerter Gleichrichter ausgebildet, insbesondere als einfacher Dioden-Brückengleichrichter. In diesen Fällen muss die elektrische Energie anderweitig aus dem Zwischenkreis abgeführt werden.

Eine Möglichkeit besteht darin, an den Zwischenkreis sogenannte Bremswiderstände anzuschalten, in welchen die rückgespeiste elektrische Energie in Wärme umgesetzt wird. Oftmals sind jedoch mehrere parallel angeordnete Zwischenkreise vorhanden. In diesem Fall können die ersten Potenziale der Zwischenkreise und die zweiten Potenziale der Zwischenkreise miteinander verbunden sein. Dadurch kann ein Energiefluss von einem der Zwischenkreise in einen anderen Zwischenkreise erfolgen, so dass die in den einen der Zwischenkreise rückgespeiste elektrische Energie von dem anderen Zwischenkreis aufgenommen und an dessen Last weitergegeben werden kann.

Im einfachsten Fall erfolgt eine direkte Verbindung der ersten Potenziale der Zwischenkreise und der zweiten Potenziale der Zwischenkreise miteinander. Diese Ausgestaltung weist zwar eine sehr hohe Dynamik auf. Beim Anschalten der Gleichrichter an das Versorgungsnetz ist jedoch nicht mehr in definierter Weise gewährleistet, dass jeder Zwischenkreis über seinen Gleichrichter geladen wird. Ursachen hierfür sind bei gleichartig ausgelegten und dimensionierten Zwischenkreisumrichtern Bauteiltoleranzen, bei unterschiedlich dimensionierten oder unterschiedlich ausgelegten Zwischenkreisumrichtern zusätzlich unterschiedliche Kennlinien der verwendeten Bauelemente. Derartige undefinierte Zustände können dazu führen, dass beim Zuschalten der gemeinsamen Energieversorgung mehrere Zwischenkreise vollständig oder zumindest im wesentlichen über den Gleichrichter eines einzelnen Zwischenkreisumrichters geladen werden. Dadurch ist es möglich, dass der Gleichrichter dieses Zwischenkreisumrichters überlastet und beschädigt bzw. zerstört wird.

Zur Vermeidung derartiger Schäden sind verschiedene Vorgehensweisen bekannt.

Eine bekannte Vorgehensweise besteht darin, Bauelemente der Zwischenkreisumrichter - insbesondere die Gleichrichter - überdimensioniert auszulegen. Diese Vorgehensweise führt zwar zu einem an sich sicheren Betrieb, hat aber erhöhte Kosten zur Folge. Weiterhin können im Falle einer direkten Verbindung in den Verbindungsleitungen hohe Ausgleichsströme fließen, die zur Zerstörung weiterer Geräte, unter Umständen sogar zu Bränden führen können.

Eine weitere bekannte Vorgehensweise besteht darin, in den Verbindungsleitungen zwischen den ersten und den zweiten Potenzialen der Zwischenkreise Widerstände anzuordnen. Bei den Widerständen kann es sich insbesondere um PTC-Widerstände (PTC = positive temperature coeffizient) handeln, d.h. um Widerstände, deren Widerstandswert bei einer Erwärmung deutlich ansteigt. Diese Vorgehensweise schützt zwar die Gleichrichter und auch die übrigen Komponenten der Zwischenkreisumrichter vor Überlastung, führt jedoch zu einer relativ geringen Dynamik und zu hohen Verlustleistungen über die Widerstände.

Eine weitere Möglichkeit besteht darin, die Widerstände durch Parallelschaltungen von Dioden zu ersetzen, wobei die Dioden der jeweiligen Parallelschaltung in entgegengesetzter Richtung leiten. Diese Vorgehensweise führt zwar zu relativ geringen Verlustleistungen, ist aber insbesondere nicht kurzschlussfest.

Eine weitere Möglichkeit besteht darin, den Gleichrichtern zum Versorgungsnetz hin Drosseln vorzuordnen. Diese Vorgehensweise schützt zwar die Gleichrichter, bewirkt aber Verlustleistungen außerhalb der Zwischenkreisumrichter. Ferner ist auch diese Ausgestaltung nicht kurzschlussfest.

Die Aufgabe der vorliegenden Erfindung besteht darin, Möglichkeiten zu schaffen, mittels derer auf einfache und zuverlässige Weise sowohl ein individueller, voneinander unabhängiger Betrieb der Zwischenkreisumrichter als auch ein Belastungsausgleich zwischen den Zwischenkreisumrichtern möglich ist.

Die Aufgabe wird durch einen Zwischenkreisumrichter mit den Merkmalen des Anspruchs 1 gelöst. Vorteilhafte Ausgestaltungen des Zwischenkreisumrichters sind Gegenstand der abhängigen Ansprüche 2 bis 11.

Erfindungsgemäß wird ein Zwischenkreisrichter der eingangs genannten Art dadurch ausgestaltet,

- dass in der ersten Leitung ein erstes Schaltelement angeordnet ist, dem eine erste Diode parallel geschaltet ist, so dass bei geöffnetem erstem Schaltelement der Zwischenkreiskondensator über die erste Diode zwar geladen werden kann, nicht aber entladen werden kann und bei geschlossenem erstem Schaltelement der Zwischenkreiskondensator über das erste Schaltelement zumindest entladen werden kann,
- dass der Zwischenkreisumrichter eine Steuereinrichtung aufweist, welche das erste Schaltelement in Abhängigkeit von einer im Zwischenkreis herrschenden Zwischenkreisspannung ansteuert,
- dass in der ersten Leitung zwischen dem ersten Schaltelement und dem ersten Anschluss eine erste Induktivität angeordnet ist,
- dass der Zwischenkreisumrichter eine Freilaufdiode aufweist, welche die erste und die zweite Leitung miteinander verbindet, und,
- dass ein erster Diodenknotenpunkt, an dem die Freilaufdiode mit der ersten Leitung verbunden ist, zwischen dem ersten Schaltelement und der ersten Induktivität angeordnet ist.

Solange das erste Schaltelement geöffnet bleibt, wird der Zwischenkreisumrichter unabhängig von etwaigen anderen Zwischenkreisumrichtern betrieben, deren erste und zweite Potenziale mit dem ersten und dem zweiten Anschluss des genannten Zwischenkreisumrichters verbunden sind. Je nach Ausmaß, in dem das erste Schaltelement geschlossen wird, ist jedoch ein Energiefluss aus dem Zwischenkreis heraus zu den Zwischenkreisen von anderen Zwischenkreisumrichtern möglich. Dadurch ist es möglich, den Zwischenkreis des Zwischenkreisumrichters nach Bedarf von den Zwischenkreisen anderer Zwischenkreisumrichter zu entkoppeln oder mit ihnen zu koppeln.

Es ist möglich, dass die Anschlüsse interne, eher fiktive Anschlüsse sind. Es ist aber auch möglich, dass die Anschlüsse von außen zugängliche Anschlüsse sind, an die jeweils eine Leitung lösbar angeschlossen werden kann. Beispiele derartiger Anschlüsse sind Schraubklemmen, Steckerbuchsen, Schneidklemmen und dergleichen mehr.

Im einfachsten Fall steuert die Steuereinrichtung das erste Schaltelement ausschließlich in Abhängigkeit von der im Zwischenkreis herrschenden Zwischenkreisspannung an. Insbesondere kann die Steuereinrichtung das erste Schaltelement schließen bzw. durchschalten, wenn die Zwischenkreisspannung - also die Differenz zwischen dem ersten und dem zweiten Potenzial des Zwischenkreises - einen vorbestimmten Wert überschreitet. Das Tastverhältnis - also der Prozentanteil an einer Periode, während dessen die Steuereinrichtung das erste Schaltelement schließt - kann von der Steuereinrichtung anhand einer vorgegebenen Funktion bestimmt werden, der als Eingangsparameter die Zwischenkreisspannung zugeführt wird und die als Ausgangsparameter das Tastverhältnis liefert.

Alternativ ist es möglich, dass die Steuereinrichtung das erste Schaltelement in Abhängigkeit von der im Zwischenkreis herrschenden Zwischenkreisspannung und zusätzlich in Abhängigkeit von einem über die erste Leitung oder die zweite Leitung fließenden Strom ansteuert. Beispielsweise kann die Steuereinrichtung in Abhängigkeit von der Zwischenkreisspannung entscheiden, ob sie das erste Schaltelement überhaupt schließt, und das erste Schaltelement jeweils wieder öffnen, wenn der dem Zwischenkreis entnommene Strom einen vorbestimmten Wert überschreitet. Dadurch können - je nach Messstelle für den Strom - durch rechtzeitiges Abregeln bei Erreichen eines kritischen Stromes beispielsweise ein Bauelementeschutz realisiert werden oder ein definierter Energieausgleich zwischen mehreren Zwischenkreisen realisiert werden.

Es ist auch möglich, dass die Steuereinrichtung das erste Schaltelement in Abhängigkeit vom Produkt der im Zwischenkreis herrschenden Zwischenkreisspannung und dem über die erste Leitung oder die zweite Leitung fließenden Strom ansteuert. In diesem Fall kann die Steuereinrichtung beispielsweise in Abhängigkeit von der Zwischenkreisspannung entscheiden, ob sie das erste Schaltelement überhaupt schließt, und das erste Schaltelement jeweils wieder öffnen, wenn die dem Zwischenkreis entnommene Leistung einen vorbestimmten Wert überschreitet.

Im einfachsten Fall ist die zweite Leitung, die mit dem zweiten Potenzial des Zwischenkreises verbunden ist, eine einfache, direkte Verbindung des zweiten Anschlusses mit dem Zwischenkreis. Vorzugsweise jedoch ist vorgesehen,

- dass in der zweiten Leitung ein zweites Schaltelement angeordnet ist, dem eine zweite Diode parallel geschaltet ist, so dass bei geöffnetem zweitem Schaltelement der Zwischenkreiskondensator über die zweite Diode zwar geladen werden kann, nicht aber entladen werden kann und bei geschlossenem zweitem Schaltelement der Zwischenkreiskondensator über das zweite Schaltelement zumindest entladen werden kann,

- dass die Steuereinrichtung zusätzlich zum ersten Schaltelement auch das zweite Schaltelement in Abhängigkeit von der im Zwischenkreis herrschenden Zwischenkreisspannung ansteuert und

- dass ein zweiter Diodenknotenpunkt, an dem die Freilaufdiode mit der zweiten Leitung verbunden ist, zwischen dem zweiten Anschluss und einem zweiten Schaltelement angeordnet ist.

Dadurch ist ein zweipolige Trennung des Zwischenkreises von den Anschlüssen möglich. Die Betriebssicherheit wird dadurch erhöht.

Vorzugsweise steuert die Steuereinrichtung das zweite Schaltelement gleichartig zum ersten Schaltelement an. Wenn die Steuereinrichtung also das erste Schaltelement öffnet, so öffnet sie auch das zweite Schaltelement. Gleiches gilt für das Schließen der Schaltelemente.

Vorzugsweise ist in der zweiten Leitung zwischen dem zweiten Diodenknotenpunkt und dem zweiten Anschluss eine zweite Induktivität angeordnet. Dadurch ergibt sich ein symmetrischer Aufbau des Zwischenkreisumrichters. Im Falle des Vorhandenseins der zweiten Induktivität können die erste Induktivität und die zweite Induktivität magnetisch miteinander gekoppelt seien. Alternativ können sie als Einzelinduktivitäten ausgebildet sein.

Vorzugsweise ist vorgesehen,

- dass der Zwischenkreisumrichter einen zusätzlichen Kondensator aufweist, der die erste und die zweite Leitung miteinander verbindet,

- dass ein erster Kondensatorknotenpunkt, an dem der zusätzliche Kondensator mit der ersten Leitung verbunden ist, zwischen dem ersten Anschluss und der ersten Induktivität angeordnet ist und

- dass ein zweiter Kondensatorknotenpunkt, an dem der zusätzliche Kondensator mit der zweiten Leitung verbunden ist, zwischen dem zweiten Anschluss und der zweiten Induktivität angeordnet ist.

Diese Ausgestaltung ist prinzipiell auch dann realisierbar, wenn die zweite Induktivität nicht vorhanden ist. In diesem Fall ist der zweite Kondensatorknotenpunkt zwischen dem zweiten Anschluss und dem zweiten Diodenknotenpunkt angeordnet. Wenn auch das zweite Schaltelement und die zweite Diode entfallen, kann der zweite Kondensatorknotenpunkt an beliebiger Stelle mit der zweiten Leitung verbunden sein.

Es ist möglich, dass die dem ersten Schaltelement parallel geschaltete erste Diode eine eigenständige, separat vorhandene Diode ist. Vorzugsweise handelt es sich bei der ersten Diode jedoch um eine dem ersten Schaltelement intrinsische Diode. Gleiches gilt, falls vorhanden, für eine einem zweiten Schaltelement parallel geschaltete zweite Diode.

Der eingangsseitige Gleichrichter kann als gesteuerter Gleichrichter ausgebildet sein. Vorzugsweise ist der eingangsseitige Gleichrichter jedoch als ungesteuerter Gleichrichter ausgebildet.

Die Aufgabe wird weiterhin durch eine Gruppe von Zwischenkreisumrichtern mit den Merkmalen des Anspruchs 12 gelöst. Erfindungsgemäß sind bei der Gruppe von Zwischenkreisumrichtern die Zwischenkreisumrichter jeweils erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1    einen Zwischenkreisumrichter,
FIG 2    einen weiteren Zwischenkreisumrichter und
FIG 3    eine Gruppe von Zwischenkreisumrichtern.

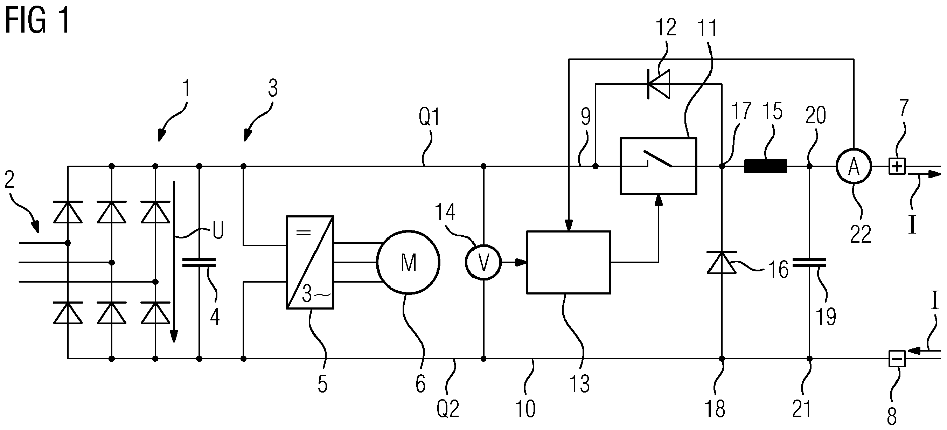

FIG 1 zeigt eine grundlegende Ausgestaltung eines Zwischenkreisumrichters.

Gemäß FIG 1 weist der Zwischenkreisumrichter einen eingangsseitigen Gleichrichter 1 auf. Der eingangsseitige Gleichrichter 1 ist mit einer eingangsseitigen Energieversorgung 2 verbunden, beispielsweise einem üblichen dreiphasigen Drehstromnetz mit einer Nennspannung von beispielsweise 400 V oder von 690 V. Der Gleichrichter 1 ist in der Regel als ungesteuerter Gleichrichter ausgebildet, also als reiner Diodengleichrichter. Prinzipiell kann der Gleichrichter 1 aber auch als gesteuerter, rückspeisefähiger Umrichter ausgebildet sein.

Über den eingangsseitigen Gleichrichter 1 ist ein Zwischenkreis 3 mit der Energieversorgung 2 verbunden. Der Zwischenkreis 3 weist unter anderem einen Zwischenkreiskondensator 4 auf. Somit ist auch der Zwischenkreiskondensator 4 über den eingangsseitigen Gleichrichter 1 mit der Energieversorgung 2 verbunden.

Der Zwischenkreisumrichter weist weiterhin einen ausgangsseitigen Wechselrichter 5 auf. Über den ausgangsseitigen Wechselrichter 5 sind der Zwischenkreis 3 und der Zwischenkreiskondensator 4 mit einer Last 6 verbunden, beispielsweise einer elektrischen Maschine.

In der Regel weist der Zwischenkreisumrichter weiterhin zwischen dem eingangsseitigen Gleichrichter 1 und dem Zwischenkreiskondensator 4 eine Ladeschaltung auf, die aus einem Widerstand und einem dem Widerstand parallel geschalteten Schalter besteht. Beim Zuschalten der Energieversorgung 2 ist der Schalter zunächst geöffnet, so dass der Zwischenkreiskondensator 4 nur über den Widerstand und damit strombegrenzt geladen wird. Dadurch wird eine Überlastung des eingangsseitigen Gleichrichters 1 vermieden. Nach dem teilweisen oder vollständigen Laden des Zwischenkreiskondensators 4 wird der Schalter geschlossen, so dass der Zwischenkreiskondensator 4 nunmehr niederohmig mit dem eingangsseitigen Gleichrichter 1 verbunden ist. Die Ladeschaltung und der Betrieb der Ladeschaltung sind Fachleuten allgemein bekannt. Sie sind im Rahmen der vorliegenden Erfindung jedoch von untergeordneter Bedeutung und daher in den FIG nicht dargestellt.

Der Zwischenkreis 3 weist im Betrieb ein erstes Potenzial Q1 und ein zweites Potenzial Q2 auf. Die Differenz der Potenziale Q1 und Q2 entspricht der Zwischenkreisspannung U = Q1 - Q2.

Der Zwischenkreisumrichter weist weiterhin einen ersten Anschluss 7 und einen zweiten Anschluss 8 auf. Der erste Anschluss 7 ist über eine erste Leitung 9 mit dem ersten Potenzial Q1 des Zwischenkreises 3 verbunden. Der zweite Anschluss 8 ist über eine zweite Leitung 10 mit dem zweiten Potenzial Q2 des Zwischenkreises verbunden.

Die Verbindung des zweiten Anschlusses 8 mit dem zweiten Potenzial Q2 kann in der grundlegenden Ausgestaltung gemäß FIG 1 direkt sein. In der ersten Leitung 9 ist jedoch ein erstes Schaltelement 11 angeordnet. Bei dem ersten Schaltelement 11 kann es sich beispielsweise um einen MOSFET handeln. Dem ersten Schaltelement 11 ist eine erste Diode 12 parallel geschaltet. Die erste Diode 12 ist derart geschaltet (gepolt), dass über die erste Diode 12 der Zwischenkreiskondensator 4 zwar geladen werden kann, nicht aber entladen werden kann. Wenn, wie in FIG 1 dargestellt, das erste Potenzial Q1 größer als das zweite Potenzial Q2 ist, ist also die Kathode der ersten Diode 12 zum Zwischenkreis 3 hin angeordnet, die Anode zum ersten Anschluss 7 hin. Wenn das erste Schaltelement 11 geöffnet ist (so dass es also keinen Strom leiten kann), können von den Anschlüssen 7, 8 aus über die erste Diode 12 der Zwischenkreis 3 mit ihm der Zwischenkreiskondensator 4 zwar geladen werden, nicht aber entladen. Die erste Diode 12 kann eine eigenständige Diode sein, also ein vom ersten Schaltelement 11 verschiedenes Bauelement. In der Regel handelt es sich bei der ersten Diode 12 jedoch um eine dem ersten Schaltelement 11 intrinsische Diode.

Der Zwischenkreisumrichter weist weiterhin eine Steuereinrichtung 13 auf, welche das erste Schaltelement 11 ansteuert. Je nach Ansteuerzustand ist das erste Schaltelement 11 entweder völlig geöffnet bzw. gesperrt (kein Stromfluss ist möglich) oder völlig geschlossen bzw. durchgeschaltet (Stromfluss ist möglich). Im durchgeschalteten Zustand ist über das erste Schaltelement 11 zumindest ein Stromfluss dahingehend möglich, dass der Zwischenkreis 3 und mit ihm der Zwischenkreiskondensator 4 über das erste Schaltelement 11 entladen werden können. In manchen Ausgestaltungen des ersten Schaltelements 11 ist sogar ein Stromfluss in beide Richtungen möglich.

Mittels eines Spannungsmessers 14 wird die im Zwischenkreis 3 herrschende Zwischenkreisspannung U erfasst. Der erfasste Spannungswert wird der Steuereinrichtung 13 zugeführt. Die Steuereinrichtung 13 steuert das erste Schaltelement 11 in Abhängigkeit von dem erfassten Spannungswert U an. Insbesondere kann die Steuereinrichtung 13 den erfassten Spannungswert U mit einem vorbestimmten Spannungswert U0 vergleichen. Ist der erfasste Spannungswert U kleiner als der vorbestimmte Spannungswert U0, bleibt das erste Schaltelement 11 geöffnet bzw. gesperrt. Ist der erfasste Spannungswert U größer als der vorbestimmte Spannungswert U0, wird das erste Schaltelement 11 temporär oder permanent geschlossen, bis der erfasste Spannungswert U wieder unter den vorbestimmten Spannungswert U0 sinkt. Ein Ansteigen der Zwischenkreisspannung U kann insbesondere auftreten, wenn die Last 6 als elektrische Maschine ausgebildet ist, die temporär im generatorischen Betrieb arbeiten kann.

Der vorbestimmte Spannungswert U0 ist geeignet festgelegt. Er kann insbesondere geringfügig größer als die Nennspannung sein, die im Zwischenkreis 3 herrschen sollte. Insbesondere sollte der vorbestimmte Spannungswert U0 derart bestimmt sein, dass das erste Schaltelement 11 beim Anschalten der Energieversorgung 2 an den Zwischenkreisumrichter, also beim Aufladen des Zwischenkreises 3 auf seine Nennspannung, geöffnet bleibt. Dadurch wird erreicht, dass die über den eingangsseitigen Gleichrichter 1 in den Zwischenkreis 3 eingespeiste Energie nicht über die Anschlüsse 7, 8 anderen Einrichtungen zugeführt wird, die an die Anschlüsse 7, 8 angeschlossen sind, beispielsweise den Zwischenkreisen von anderen Zwischenkreisumrichtern.

Zur Begrenzung des Stromanstiegs beim Schließen/Durchschalten des ersten Schaltelements 11 ist in der ersten Leitung 9 zwischen dem ersten Schaltelement 11 und dem ersten Anschluss 7 eine erste Induktivität 15 angeordnet. Weiterhin weist der Zwischenkreisumrichter eine Freilaufdiode 16 auf, welche die erste und die zweite Leitung 9, 10 miteinander verbindet. Die Freilaufdiode 16 ist mit der ersten Leitung 9 an einem ersten Diodenknotenpunkt 17 verbunden, mit der zweiten Leitung 10 an einem zweiten Diodenknotenpunkt 18. Der erste Diodenknotenpunkt 17 ist zwischen dem ersten Schaltelement 11 und der ersten Induktivität 15 angeordnet. Der zweite Diodenknotenpunkt 18 kann prinzipiell an beliebiger Stelle mit der zweiten Leitung 10 verbunden sein.

In der Regel weist der Zwischenkreisumrichter einen zusätzlichen Kondensator 19 auf, der ebenfalls die erste und die zweite Leitung 9, 10 miteinander verbindet. Der zusätzliche Kondensator 19 ist mit der ersten Leitung 9 an einem ersten Kondensatorknotenpunkt 20 verbunden, mit der zweiten Leitung 10 an einem zweiten Kondensatorknotenpunkt 21. In diesem Fall ist der erste Kondensatorknotenpunkt 20 zwischen dem ersten Anschluss 7 und der ersten Induktivität 15 angeordnet. Der zweite Kondensatorknotenpunkt 21 ist in der Regel zwischen dem zweiten Anschluss 8 und dem zweiten Diodenknotenpunkt 18 angeordnet.

Der Zwischenkreisumrichter kann weiterhin eine zweite Induktivität (in FIG 1 nicht dargestellt) aufweisen. Wenn die zweite Induktivität vorhanden ist, ist sie in der zweiten Leitung 10 zwischen dem zweiten Anschluss 8 und dem zweiten Diodenknotenpunkt 18 angeordnet. Wenn die zweite Induktivität zusätzlich zu dem zusätzlichen Kondensator 19 vorhanden ist, ist sie in der zweiten Leitung 10 zwischen dem zweiten Kondensatorknotenpunkt 21 und dem zweiten Diodenknotenpunkt 18 angeordnet.

Die erste Induktivität 15 und die Freilaufdiode 16 wirken - gegebenenfalls unterstützt durch den zusätzlichen Kondensator 19 und/oder die zweite Induktivität - mit dem ersten Schaltelement 11 nach Art eines Schaltnetzteils zusammen. Wenn das erste Schaltelement 11 geschlossen wird, kann in der ersten Leitung 9 ein Strom I fließen. Der Strom I fließt in diesem Zustand über das erste Schaltelement 11. Aufgrund der ersten Induktivität 15 und gegebenenfalls auch der zweiten Induktivität steigt der Strom I aber nicht abrupt, sondern nur allmählich an. Wenn umgekehrt das erste Schaltelement 11 geöffnet wird, wird der Strom I durch die erste Induktivität 15 und gegebenenfalls auch die zweite Induktivität getrieben. Der Strom I fällt also nicht abrupt, sondern nur allmählich ab. In diesem Zustand fließt der Strom I über die Freilaufdiode 16.

Es ist im einfachsten Fall möglich, dass die Steuereinrichtung 13 die Ansteuerung des ersten Schaltelements 11 ausschließlich in Abhängigkeit von der im Zwischenkreis 3 herrschenden Zwischenkreisspannung U ermittelt und das erste Schaltelement 11 entsprechend ansteuert. Beispielsweise kann die Steuereinrichtung 13 permanent geöffnet halten, solange die Zwischenkreisspannung U unterhalb des vorbestimmten Spannungswertes U0 liegt. Sobald die Zwischenkreisspannung U den vorbestimmten Spannungswert U0 überschreitet, wird das Schaltelement 11 jedoch mit einem festen Tastverhältnis V angesteuert. Wenn das Tastverhältnis V unter 1 liegt, wird periodisch das Schaltelement 11 während erster Zeiten T1 geschlossen und während zweiter Zeiten T2 geöffnet, wobei die Beziehung

$$V = T1/(T1+T2)$$

gilt. Wenn das Tastverhältnis V bei 1 liegt, bleibt das erste Schaltelement 11 permanent geschlossen. Ein Tastverhältnis V von 0 - das heißt das erste Schaltelement 11 bleibt permanent geöffnet - tritt nur auf, wenn die Zwischenkreisspannung U unterhalb des vorbestimmten Spannungswertes U0 liegt.

Nachfolgend wird in Verbindung mit FIG 1 eine mögliche Ausgestaltung erläutert, bei welcher die Steuereinrichtung 13 das erste Schaltelement 11 nicht nur in Abhängigkeit von der Zwischenkreisspannung U ansteuert, sondern zusätzlich auch den in der ersten Leitung 9 fließenden Strom I berücksichtigt. In diesem Fall ist zusätzlich ein Strommesser 22 vorhanden. Der Strommesser 22 kann entsprechend der Darstellung in FIG 1 in der Nähe des ersten Anschlusses 7 in der ersten Leitung 9 angeordnet sein, insbesondere zwischen dem ersten Kondensatorknotenpunkt 20 und dem ersten Anschluss 7. Der Strommesser 22 kann aber auch an anderer Stelle in der ersten Leitung 9 angeordnet sein, beispielsweise zwischen dem Zwischenkreiskondensator 4 und dem ersten Schaltelement 11.

Ebenso kann der Strommesser 22 alternativ in der zweiten Leitung 10 angeordnet sein.

Der Strommesser 22 erfasst den Strom I und führt einen entsprechenden Messwert der Steuereinrichtung 13 zu. Die Steuereinrichtung 13 steuert in diesem Fall das erste Schaltelement 11 in Abhängigkeit von dem erfassten Spannungswert U und in Abhängigkeit von dem erfassten Stromwert I an. Der Spannungswert U kann in diesem Fall beispielsweise (rein binär) dafür ausschlaggebend sein, ob das erste Schaltelement 11 überhaupt geschlossen wird. Insbesondere bleibt in diesem Fall das erste Schaltelement 11 geöffnet bzw. gesperrt, wenn und solange der erfasste Spannungswert U kleiner als der vorbestimmte Spannungswert U0 ist. Ist der erfasste Spannungswert U hingegen größer als der vorbestimmte Spannungswert U0, wird das erste Schaltelement 11 temporär geschlossen und wieder geöffnet, bis der erfasste Spannungswert U wieder unter den vorbestimmten Spannungswert U0 sinkt. Insbesondere kann die Steuereinrichtung 13 das erste Schaltelement 11 schließen und sodann geschlossen halten, bis der Strom I auf einen oberen Grenzwert angestiegen ist. Danach öffnet die Steuereinrichtung 13 das erste Schaltelement 11 und hält es sodann geöffnet, bis der Strom I auf einen unteren Grenzwert abgesunken ist. Das Tastverhältnis V ist in diesem Fall somit nicht von vornherein bestimmt, sondern ergibt sich durch den Strom I.

Es ist auch möglich, dass die Steuereinrichtung 13 das erste Schaltelement 11 in Abhängigkeit vom Produkt der Zwischenkreisspannung U mit dem Strom I ansteuert. Insbesondere ist es möglich, dass die Steuereinrichtung 13 das erste Schaltelement 11 geöffnet bzw. gesperrt hält, wenn und solange der erfasste Spannungswert U kleiner als der vorbestimmte Spannungswert U0 ist. Wenn hingegen der erfasste Spannungswert U größer als der vorbestimmte Spannungswert U0 ist, wird das erste Schaltelement 11 temporär geschlossen und wieder geöffnet, bis der erfasste Spannungswert U wieder unter den vorbestimmten Spannungswert U0 sinkt. Insbesondere kann die Steuereinrichtung 13 das erste Schaltelement 11 schließen und sodann geschlossen halten, bis das Produkt der Zwischenkreisspannung U mit dem Strom I auf einen oberen Grenzwert angestiegen ist. Danach öffnet die Steuereinrichtung 13 das erste Schaltelement 11 und hält es sodann geöffnet, bis das Produkt der Zwischenkreisspannung U mit dem Strom I auf einen unteren Grenzwert abgesunken ist. Das Tastverhältnis V ist somit auch in diesem Fall nicht von vornherein bestimmt, sondern ergibt sich durch das Produkt der Zwischenkreisspannung U mit dem Strom I.

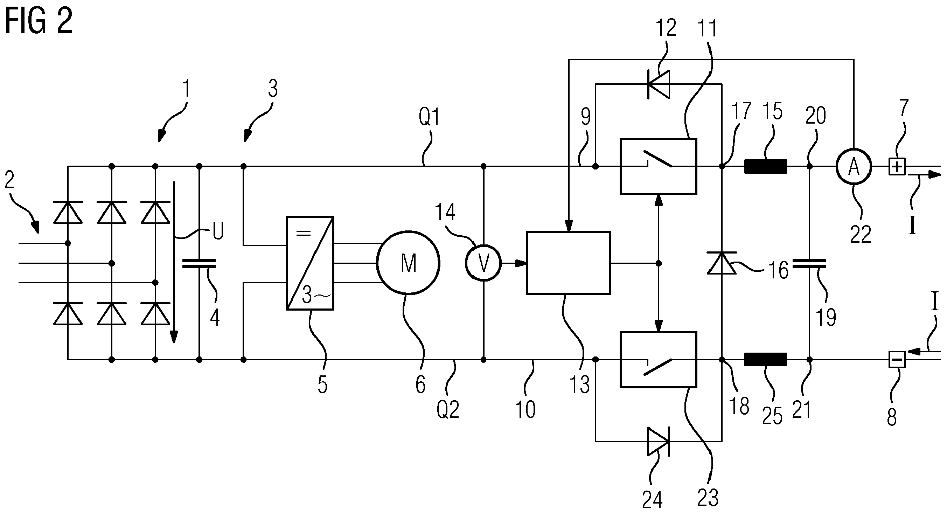

Nachfolgend wird in Verbindung mit FIG 2 eine weitere Ausgestaltung des Zwischenkreisumrichters erläutert. Die Ausgestaltung gemäß FIG 2 baut auf der Ausgestaltung von FIG 1 auf. Die dortigen Elemente 1 bis 22 werden daher nicht nochmals erläutert.

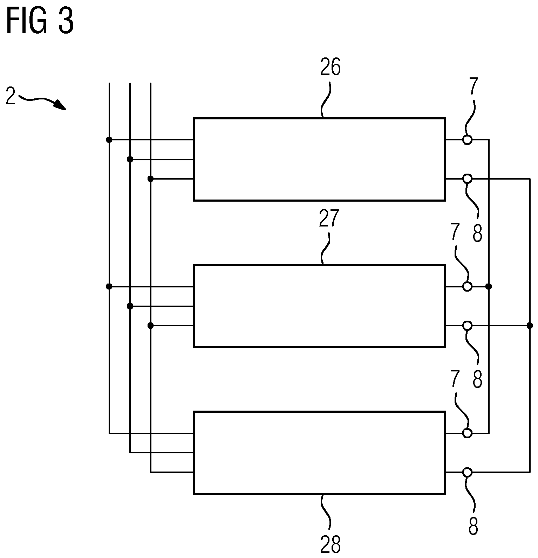

Gemäß FIG 3 ist nicht nur in der ersten Leitung 9 das erste Schaltelement 11 angeordnet, sondern zusätzlich in der zweiten Leitung 10 ein zweites Schaltelement 23 angeordnet. Bei dem zweiten Schaltelement 23 kann es sich analog zum ersten Schaltelement 11 beispielsweise um einen MOSFET handeln. Dem zweiten Schaltelement 23 ist analog zum ersten Schaltelement 11 eine zweite Diode 24 parallel geschaltet. Die zweite Diode 24 ist analog zur ersten Diode 12 derart geschaltet, dass über die zweite Diode 24 der Zwischenkreiskondensator 4 zwar geladen werden kann, nicht aber entladen werden kann.

Wenn, wie in FIG 3 (und auch in FIG 1) dargestellt, das erste Potenzial Q1 größer als das zweite Potenzial Q2 ist, ist also die Anode der zweiten Diode 24 zum Zwischenkreis 3 hin angeordnet, die Kathode zum zweiten Anschluss 8 hin. Wenn das zweite Schaltelement 23 geöffnet ist, können somit von den Anschlüssen 7, 8 aus über die zweite Diode 24 der Zwischenkreis 3 mit ihm der Zwischenkreiskondensator 4 zwar geladen werden, nicht aber entladen. Die zweite Diode 24 kann eine eigenständige Diode sein, also ein vom zweiten Schaltelement 23 verschiedenes Bauelement. In der Regel handelt es sich bei der zweiten Diode 24 jedoch - analog zur ersten Diode 12 - um eine dem zweiten Schaltelement 23 intrinsische Diode. Der zweite Diodenknotenpunkt 18 ist im Falle der Ausgestaltung gemäß FIG 3 zwischen dem zweiten Anschluss 8 und dem zweiten Schaltelement 23 mit der zweiten Leitung 10 verbunden. Falls der zusätzliche Kondensator 19 vorhanden ist, ist weiterhin vorzugsweise der zweite Kondensatorknotenpunkt 21 zwischen dem zweiten Anschluss 8 und dem zweiten Diodenknotenpunkt 18 angeordnet.

Vorzugsweise - dies ist aber nicht zwingend - ist weiterhin in der zweiten Leitung 10 eine zweite Induktivität 25 angeordnet. Die zweite Induktivität 25 ist in diesem Fall zwischen dem zweiten Diodenknotenpunkt 18 und dem zweiten Anschluss angeordnet. Falls zusätzlich auch der zusätzliche Kondensator 19 vorhanden ist, ist der zweite Kondensatorknotenpunkt 21 zwischen dem zweiten Anschluss 8 und der zweiten Induktivität 25 angeordnet.

Im Falle des Vorhandenseins des zweiten Schaltelements 23 steuert die Steuereinrichtung 13 zusätzlich zum ersten Schaltelement 11 auch das zweite Schaltelement 23 in Abhängigkeit von der Zwischenkreisspannung U an. Vorzugsweise erfolgt hierbei eine gleichartige Ansteuerung. Zu jedem Zeitpunkt, zu dem die Steuereinrichtung 13 das erste Schaltelement 11 durchschaltet, schaltet sie also vorzugsweise auch das zweite Schaltelement 23 durch. Ebenso sperrt die Steuereinrichtung 13 vorzugsweise zu jedem Zeitpunkt, zu dem sie das erste Schaltelement 11 sperrt, auch das zweite Schaltelement 23. Im übrigen gelten die obigen Ausführungen zu FIG 1. Es ist also sowohl eine Ansteuerung des zweiten Schaltelements 23 ausschließlich in Abhängigkeit von der Zwischenkreisspannung U als auch eine Ansteuerung in Abhängigkeit von sowohl der Zwischenkreisspannung U als auch dem Strom I möglich, auch in Abhängigkeit vom Produkt von Zwischenkreisspannung U und Strom I.

Die Anschlüsse 7, 8 können nach Bedarf genutzt werden. Im einfachsten Fall kann an die Anschlüsse 7, 8 ein sogenannter Bremswiderstand angeschlossen werden, d.h. ein Widerstand, über den im Zwischenkreis 3 anfallende überschüssige Energie dem Zwischenkreis 3 entnommen und in Wärme umgesetzt wird. Vorzugsweise sind entsprechend der Darstellung in FIG 3 jedoch mehrere Zwischenkreisumrichter vorhanden. Die Zwischenkreisumrichter sind in FIG 3 nur schematisch dargestellt. Sie sind insbesondere so ausgestaltet, wie dies obenstehend in Verbindung mit den FIG 1 und 2 erläutert wurde. Die Zwischenkreisumrichter müssen nicht gleichartig ausgestaltet sein. Es ist möglich, dass die Zwischenkreisumrichter verschiedene Ausgestaltungen der vorliegenden Erfindung implementieren.

In FIG 3 sind rein beispielhaft drei Zwischenkreisumrichter dargestellt, die mit den Bezugszeichen 26, 27 und 28 versehen sind. Es könnten aber auch nur zwei oder umgekehrt mehr als drei Zwischenkreisumrichter vorhanden sein. Gemäß FIG 3 sind die ersten Anschlüsse 7 der Zwischenkreisumrichter 26, 27, 28 miteinander verbunden. Ebenso sind auch die zweiten Anschlüsse 8 der Zwischenkreisumrichter 26, 27, 28 miteinander verbunden. Dadurch kann in dem Fall, dass in einem der Zwischenkreisumrichter 26, 27, 28 - beispielsweise im Zwischenkreisumrichter 26 - aufgrund einer Rückspeisung durch die dortige Last 6 die dortige Zwischenkreisspannung U ansteigt, durch entsprechende Ansteuerung der Schaltelemente 11, 23 dieses Zwischenkreisumrichters aus dem Zwischenkreis 3 dieses Zwischenkreisumrichters Energie entnommen und den Zwischenkreisen 3 der anderen Zwischenkreisumrichter - beispielsweise den Zwischenkreisen 3 der Zwischenkreisumrichter 27 und 28 - zugeführt werden.

Zusammengefasst betrifft die vorliegende Erfindung somit folgenden Sachverhalt:

Ein Zwischenkreisumrichter weist einen Zwischenkreis 3 mit einem Zwischenkreiskondensator 4 auf, die über einen Gleichrichter 1 mit einer Energieversorgung 2 und über einen Wechselrichter 5 mit einer Last 6 verbunden sind. Der Zwischenkreisumrichter weist zwei Anschlüsse 7, 8 auf, die über Leitungen 9, 10 den Potenzialen Q1, Q2 des Zwischenkreises 3 verbunden sind. In einer Leitung 9 ist ein Schaltelement 11 angeordnet, dem eine Diode 12 parallel geschaltet ist. Dadurch kann bei geöffnetem Schaltelement 11 der Zwischenkreiskondensator 4 über die Diode 12 zwar geladen werden, nicht aber entladen. Bei geschlossenem Schaltelement 11 kann der Zwischenkreiskondensator 4 über das Schaltelement 11 zumindest entladen werden. Der Zwischenkreisumrichter weist eine Steuereinrichtung 13 auf, welche das Schaltelement 11 in Abhängigkeit von der Zwischenkreisspannung U ansteuert. In der Leitung 9 ist zwischen dem Schaltelement 11 und dem Anschluss 7 eine Induktivität 15 angeordnet. Der Zwischenkreisumrichter weist eine Freilaufdiode 16 auf, welche die Leitungen 9, 10 miteinander verbindet. Ein Diodenknotenpunkt 20, an dem die Freilaufdiode 16 mit der einen Leitung 9 verbunden ist, ist zwischen dem Schaltelement 11 und der Induktivität 15 angeordnet.

Die vorliegende Erfindung weist viele Vorteile auf. Insbesondere werden mehrere, über ihre Anschlüsse 7, 8 miteinander verbundenen Zwischenkreisumrichter 26, 27, 28 im Normalbetrieb unabhängig voneinander betrieben. Der Normalbetrieb umfasst das Anschalten an die Energieversorgung 2, die kontinuierliche Speisung über die Energieversorgung 2 und auch das erneute Anschalten der Energieversorgung, beispielsweise nach einer Kurzzeitunterbrechung. Auch bei stark unterschiedlichen Belastungen und auch beim Auftreten eines Kurzschluss fließen keine Ausgleichsströme zwischen den Zwischenkreisumrichtern 26, 27, 28. Die thermische Belastung der verwendeten Komponenten der Zwischenkreisumrichter 26, 27, 28 kann reduziert werden und so die Lebensdauer der Komponenten erhöht werden. Eine Kopplung der Zwischenkreisumrichter 26, 27, 28 erfolgt nur dann, wenn in einem der Zwischenkreisumrichter 26, 27, 28 eine überhöhte Zwischenkreisspannung U auftritt. In diesem Fall muss überschüssige Energie nicht in Wärme umgesetzt werden, sondern kann einem der anderen Zwischenkreisumrichter 26, 27, 28 zugeführt und dort genutzt werden. Die Zwischenkreisumrichter 26, 27, 28 können unabhängig voneinander dimensioniert und ausgelegt werden. Eine Überdimensionierung ist nicht mehr erforderlich. Die Charakteristika der Steuereinrichtung 13 des jeweiligen Zwischenkreisumrichters 26, 27, 28 kann individuell und sehr flexibel an die Einsatzbedingungen und auch an die Leistungsfähigkeit der Schalter 11, 23 angepasst werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Zwischenkreisumrichter,

   - wobei der Zwischenkreisumrichter einen Zwischenkreis (3) mit einem Zwischenkreiskondensator (4) aufweist,
   - wobei der Zwischenkreis (3) und mit ihm der Zwischenkreiskondensator (4) über einen eingangsseitigen Gleichrichter (1) mit einer Energieversorgung (2) verbunden sind und über einen ausgangsseitigen Wechselrichter (5) mit einer Last (6) verbunden sind,
   - wobei der Zwischenkreisumrichter einen ersten und einen zweiten Anschluss (7, 8) aufweist, die über eine erste und eine zweite Leitung (9, 10) mit einem ersten und einem zweiten Potenzial (Q1, Q2) des Zwischenkreises (3) verbunden sind,

   **dadurch gekennzeichnet,**

   - **dass** in der ersten Leitung (9) ein erstes Schaltelement (11) angeordnet ist, dem eine erste Diode (12) parallel geschaltet ist, so dass bei geöffnetem erstem Schaltelement (11) der Zwischenkreiskondensator (4) über die erste Diode (12) zwar geladen werden kann, nicht aber entladen werden kann und bei geschlossenem erstem Schaltelement (11) der Zwischenkreiskondensator (4) über das erste Schaltelement (11) zumindest entladen werden kann,
   - **dass** der Zwischenkreisumrichter eine Steuereinrichtung (13) aufweist, welche das erste Schaltelement (11) in Abhängigkeit von einer im Zwischenkreis (3) herrschenden Zwischenkreisspannung (U) ansteuert,
   - **dass** in der ersten Leitung (9) zwischen dem ersten Schaltelement (11) und dem ersten Anschluss (7) eine erste Induktivität (15) angeordnet ist,
   - **dass** der Zwischenkreisumrichter eine Freilaufdiode (16) aufweist, welche die erste und die zweite Leitung (9, 10) miteinander verbindet, und
   - **dass** ein erster Diodenknotenpunkt (17), an dem die Freilaufdiode (16) mit der ersten Leitung (9) verbunden ist, zwischen dem ersten Schaltelement (11) und der ersten Induktivität (15) angeordnet ist.

2. Zwischenkreisumrichter nach Anspruch 1, **dadurch gekennzeichnet,** **dass** die Steuereinrichtung (13) das erste Schaltelement (11) ausschließlich in Abhängigkeit von der im Zwischenkreis (3) herrschenden Zwischenkreisspannung (U) ansteuert.

3. Zwischenkreisumrichter nach Anspruch 1, **dadurch gekennzeichnet,** **dass** die Steuereinrichtung (13) das erste Schaltelement (11) in Abhängigkeit von der im Zwischenkreis (3) herrschenden Zwischenkreisspannung (U) und zusätzlich in Abhängigkeit von einem über die erste Leitung (9) oder die zweite Leitung (10) fließenden Strom (I) ansteuert.

**4.** Zwischenkreisumrichter nach Anspruch 3,
**dadurch gekennzeichnet,**
**dass** die Steuereinrichtung (13) das erste Schaltelement (11) in Abhängigkeit vom Produkt der im Zwischenkreis (3) herrschenden Zwischenkreisspannung (U) und dem über die erste Leitung (9) oder die zweite Leitung (10) fließenden Strom (I) ansteuert.

**5.** Zwischenkreisumrichter nach einem der obigen Ansprüche,
**dadurch gekennzeichnet,**

- **dass** in der zweiten Leitung (10) ein zweites Schaltelement (23) angeordnet ist, dem eine zweite Diode (24) parallel geschaltet ist, so dass bei geöffnetem zweitem Schaltelement (23) der Zwischenkreiskondensator (4) über die zweite Diode (24) zwar geladen werden kann, nicht aber entladen werden kann und bei geschlossenem zweitem Schaltelement (23) der Zwischenkreiskondensator (4) über das zweite Schaltelement (23) zumindest entladen werden kann,
- **dass** die Steuereinrichtung (13) zusätzlich zum ersten Schaltelement (11) auch das zweite Schaltelement (23) in Abhängigkeit von der im Zwischenkreis (3) herrschenden Zwischenkreisspannung (U) ansteuert und
- **dass** ein zweiter Diodenknotenpunkt (18), an dem die Freilaufdiode (16) mit der zweiten Leitung (10) verbunden ist, zwischen dem zweiten Anschluss (8) und dem zweiten Schaltelement (23) angeordnet ist.

**6.** Zwischenkreisumrichter nach Anspruch 5,
**dadurch gekennzeichnet,**
**dass** die Steuereinrichtung (13) das zweite Schaltelement (23) gleichartig zum ersten Schaltelement (11) ansteuert.

**7.** Zwischenkreisumrichter nach Anspruch 5 oder 6,
**dadurch gekennzeichnet,**
**dass** in der zweiten Leitung (10) zwischen dem zweiten Diodenknotenpunkt (18) und dem zweiten Anschluss (8) eine zweite Induktivität (25) angeordnet ist.

**8.** Zwischenkreisumrichter nach Anspruch 7,
**dadurch gekennzeichnet,**

- **dass** der Zwischenkreisumrichter einen zusätzlichen Kondensator (19) aufweist, der die erste und die zweite Leitung (9, 10) miteinander verbindet,
- **dass** ein erster Kondensatorknotenpunkt (20), an dem der zusätzliche Kondensator (19) mit der ersten Leitung (9) verbunden ist, zwischen dem ersten Anschluss (7) und der ersten Induktivität (15) angeordnet ist und
- **dass** ein zweiter Kondensatorknotenpunkt (21), an dem der zusätzliche Kondensator (19) mit der zweiten Leitung (10) verbunden ist, zwischen dem zweiten Anschluss (8) und der zweiten Induktivität (25) angeordnet ist.

**9.** Zwischenkreisumrichter nach einem der Ansprüche 1 bis 6,
**dadurch gekennzeichnet,**

- **dass** der Zwischenkreisumrichter einen zusätzlichen Kondensator (19), der die erste und die zweite Leitung (9, 10) miteinander verbindet,
- **dass** ein erster Kondensatorknotenpunkt (20), an dem der zusätzliche Kondensator (19) mit der ersten Leitung (9) verbunden ist, zwischen dem ersten Anschluss (7) und der ersten Induktivität (15) angeordnet ist und
- **dass** ein zweiter Kondensatorknotenpunkt (21), an dem der zusätzliche Kondensator (19) mit der zweiten Leitung (10) verbunden ist, zwischen dem zweiten Anschluss (8) und dem zweiten Diodenknotenpunkt (18) angeordnet ist.

**10.** Zwischenkreisumrichter nach einem der obigen Ansprüche,
**dadurch gekennzeichnet,**
**dass** die dem ersten Schaltelement (11) parallel geschaltete erste Diode (12) eine dem ersten Schaltelement (11) intrinsische Diode ist.

**11.** Zwischenkreisumrichter nach einem der obigen Ansprüche,
**dadurch gekennzeichnet,**
**dass** der eingangsseitige Gleichrichter (1) als ungesteuerter Gleichrichter ausgebildet ist.

**12.** Gruppe von Zwischenkreisumrichtern (26, 27, 28), wobei die Zwischenkreisumrichter (26, 27, 28) jeweils nach einem der obigen Ansprüche ausgebildet sind, wobei die ersten Anschlüsse (7) der Zwischenkreisumrichter (26, 27, 28) miteinander verbunden sind und die zweiten Anschlüsse (8) der Zwischenkreisumrichter (26, 27, 28) miteinander verbunden sind.

FIG 1

FIG 2

FIG 3

**Europäisches Patentamt**
**European Patent Office**
**Office européen des brevets**

# EUROPÄISCHER RECHERCHENBERICHT

Nummer der Anmeldung

EP 17 20 3953

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/229994 A1 (SAWAMURA MITSUJIRO [JP] ET AL) 10. August 2017 (2017-08-10) <br> * Abbildungen 1, 2 * <br> * Absatz [0006] * <br> * Absatz [0025] * <br> * Absatz [0029] * <br> ----- | 1-12 | INV. <br> H02M5/458 <br><br> ADD. <br> H02M1/00 <br> H02M3/155 <br> H02M1/32 |
| X | JP H10 164862 A (TOSHIBA CORP) 19. Juni 1998 (1998-06-19) <br> * Abbildung 1 * <br> * Absatz [0010] * <br> * Absatz [0013] * <br> ----- | 1-12 | |
| A | CN 101 499 771 A (YUFU WANG [CN]) 5. August 2009 (2009-08-05) <br> * Abbildung 1 * <br> ----- | 5-8 | |

RECHERCHIERTE SACHGEBIETE (IPC)

H02M
H02J

Der vorliegende Recherchenbericht wurde für alle Patentansprüche erstellt

| Recherchenort | Abschlußdatum der Recherche | Prüfer |
|---|---|---|
| Den Haag | 25. Mai 2018 | Madouroglou, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 20 3953

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-05-2018

| Im Recherchenbericht angeführtes Patentdokument | Datum der Veröffentlichung | Mitglied(er) der Patentfamilie | Datum der Veröffentlichung |
|---|---|---|---|
| US 2017229994 A1 | 10-08-2017 | CN 107070209 A<br>JP 2017143669 A<br>US 2017229994 A1 | 18-08-2017<br>17-08-2017<br>10-08-2017 |
| JP H10164862 A | 19-06-1998 | KEINE | |
| CN 101499771 A | 05-08-2009 | KEINE | |

EPO FORM P0461

Für nähere Einzelheiten zu diesem Anhang : siehe Amtsblatt des Europäischen Patentamts, Nr.12/82